(19) Europäisches Patentamt
European Patent Office
Office européen des brevets

(11) **EP 4 738 814 A1**

(12) **EUROPEAN PATENT APPLICATION**
published in accordance with Art. 153(4) EPC

(43) Date of publication:
06.05.2026 Bulletin 2026/19

(21) Application number: 24842343.6

(22) Date of filing: 15.07.2024

(51) International Patent Classification (IPC):
*H04N 17/02* (2006.01)

(86) International application number:
PCT/CN2024/105421

(87) International publication number:
WO 2025/016352 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.07.2023 CN 202310885569

(71) Applicants:
• Huawei Technologies Co., Ltd.
Shenzhen, Guangdong 518129 (CN)
• Renmin University of China
Beijing 100872 (CN)

(72) Inventors:
• CAI, Guohao
Shenzhen, Guangdong 518129 (CN)
• ZHAO, Haiyuan
Shenzhen, Guangdong 518129 (CN)
• DONG, Zhenhua
Shenzhen, Guangdong 518129 (CN)
• XU, Jun
Beijing 100872 (CN)

(74) Representative: Körber, Martin Hans
Mitscherlich PartmbB
Karlstraße 7
80333 München (DE)

(54) **VIDEO EVALUATION METHOD AND RELATED DEVICES THEREOF**

(57) This application discloses a video assessment method and a related device thereof, to accurately assess a plurality of videos, thereby accurately obtaining degrees of interest to a user for the plurality of videos. The method in this application includes: obtaining a first video group, where the first video group includes a plurality of first videos (401); processing watch times of the plurality of first videos to obtain parameters of the first video group, where the parameters of the first video group indicate biases of the watch times of the plurality of first videos and noise of the watch times of the plurality of first videos (402); and obtaining assessment values of the plurality of first videos based on the parameters of the first video group and the watch times of the plurality of first videos, where the assessment values of the plurality of first videos indicate degrees of interest to a user for the plurality of first videos (403).

FIG. 1

EP 4 738 814 A1

## Description

This application claims priority to Chinese Patent Application No. 202310885569.X, filed with the China National Intellectual Property Administration on July 18, 2023 and entitled "VIDEO ASSESSMENT METHOD AND RELATED DEVICE THEREOF", which is incorporated herein by reference in its entirety.

## TECHNICAL FIELD

Embodiments of this application relate to artificial intelligence (artificial intelligence, AI) technologies, and in particular, to a video assessment method and a related device thereof.

## BACKGROUND

With the emergence of video content platforms, more users are exposed to and watch various videos in their daily life. Accurate video recommendation plays an important role in meeting user requirements and participation. Therefore, a neural network model used to complete video recommendation emerges. In a model training process, the model learns degrees of interest to a user for a plurality of videos, so that the model can more accurately complete video recommendation.

A watch time of a video is one of important indicators for measuring a degree of interest to the user for the video. In a related technology, watch times of the plurality of videos may be calculated, to obtain a mean value of the watch times of the plurality of videos and a variance of the watch times of the plurality of videos. Then, further calculation is performed on the watch times of the plurality of videos, the mean value of the watch times of the plurality of videos, and the variance of the watch times of the plurality of videos, to obtain assessment values of the plurality of videos. The assessment values of the plurality of videos indicate the degrees of interest to the user for the plurality of videos.

In the foregoing process, when the assessment values of the plurality of videos are obtained based on the watch times of the plurality of videos, it is assumed that the degrees of interest to the user for the plurality of videos comply with Gaussian distribution. Factors considered in this setting are relatively single and do not conform to an actual case. Consequently, the obtained assessment values of the plurality of videos are not accurate enough. In other words, the degrees of interest to the user for the plurality of videos cannot be accurately obtained.

## SUMMARY

Embodiments of this application provide a video assessment method and a related device thereof, to accurately assess a plurality of videos, thereby accurately obtaining degrees of interest to a user for the plurality of videos.

According to a first aspect, an embodiment of this application provides a video assessment method. The method includes:

When video assessment needs to be performed, a batch of videos may be obtained first, and the batch of videos are divided into a plurality of video groups according to a specific standard. For one of the plurality of video groups, that is, a first video group, the first video group may include a plurality of first videos.

After the first video group is obtained, watch times of a plurality of first videos may be processed, to obtain parameters of the first video group. The parameters of the first video group include duration bias items of the first video group and noise watching items of the first video group. The duration bias items of the first video group indicate biases of the watch times of the plurality of first videos. The noise watching items of the first video group indicate noise of the watch times of the plurality of first videos.

After the parameters of the first video group are obtained, the parameters of the first video group and the watch times of the plurality of first videos may be further processed, to obtain assessment values of the plurality of first videos. Actual assessment values of the plurality of first videos indicate degrees of interest to a user for the plurality of first videos. This is equivalent to obtaining the degrees of interest to the user for the plurality of first videos. A similar operation may also be performed on another video group in the plurality of video groups except the first video group. Therefore, assessment values of all videos in the batch of videos, that is, degrees of interest to the user for all the videos in the batch of videos, may be obtained. In this way, video assessment is completed.

It can be learned from the foregoing method that when the plurality of video groups need to be assessed, the first video group including the plurality of first videos may be first obtained from the plurality of video groups. Then, the watch times of the plurality of first videos may be processed, to obtain the parameters of the first video group. Next, the parameters of the first video group and the watch times of the plurality of first videos may be further processed, to obtain the assessment values of the plurality of first videos. This is equivalent to obtaining the degrees of interest to the user for the plurality of first videos. An operation similar to the operation performed on the first video group may also be performed on another video group in the plurality of video groups. Therefore, the assessment values of all the videos in the plurality of video groups can be obtained, to complete an assessment task for the plurality of video groups. In the foregoing process, when the plurality of first videos are assessed by using the watch times of the plurality of first videos included in the first video group and the parameters of the first video group, because the parameters of the first video group include the duration bias items of the first video group and the noise watching items of the first video group, the biases of the watch times of the plurality of first videos and the noise of the watch times of the plurality of first videos are all considered in an assessment process. Factors considered in this assessment manner are relatively comprehensive, and may relatively conform to an actual case. Therefore, the assessment values that are of the plurality of first videos and that are obtained in this assessment manner have relatively high accuracy, so that the degrees of interest to the user for the plurality of first videos can be accurately obtained.

In a possible implementation, processing the watch times of the plurality of first videos, to obtain the parameters of the first video group includes: processing the watch times of the plurality of first videos by using a Gaussian mixture model, to obtain the parameters of the first video group.

In a possible implementation, obtaining the assessment values of the plurality of first videos based on the parameters of the first video group and the watch times of the plurality of first videos includes: performing a moving average operation on the parameters of the first video group and parameters of the second video group, to obtain new parameters of the first video group, where the new parameters of the first video group indicate new biases of the watch times of the plurality of first videos and new noise of the watch times of the plurality of first videos; and obtaining the assessment values of the plurality of first videos based on the new parameters of the first video group and the watch times of the plurality of first videos. In the foregoing implementation, in the plurality of video groups, to make the parameters of the first video group similar to the parameters of the second video group, a moving average operation may be performed on the parameters of the first video group, a quantity of the plurality of first videos, the parameters of the second video group, and a quantity of the plurality of second videos, to obtain the new parameters of the first video group. The new parameters of the first video group include new duration bias items of the first video group and new noise watching items of the first video group. The new duration bias items of the first video group indicate the new biases of the watch times of the plurality of first videos. The new noise watching items of the first video group indicate the new noise of the watch times of the plurality of first videos. After the new parameters of the first video group are obtained, calculation may be performed on the new parameters of the first video group and the watch times of the plurality of first videos, to obtain the actual assessment values of the plurality of first videos. It can be learned that parameters of several associated video groups are processed in a moving average operation manner, to improve accuracy of the parameters of the video groups. This facilitates more accurately completion of video assessment.

In a possible implementation, obtaining the assessment values of the plurality of first videos based on the new parameters of the first video group and the watch times of the plurality of first videos includes: performing a first affine transformation operation on a watch time of a target video and the new parameters of the first video group, to obtain an assessment value of the target video, where the target video is any one of the plurality of first videos. In the foregoing implementation, for any one of the plurality of first videos, that is, the target video, the first affine transformation operation may be performed on the watch time of the target video and the new parameters of the first video group, to obtain the assessment value of the target video. In this case, for another first video, the operation performed on the target video may also be performed on the another first video. Therefore, assessment values of all first videos in the first video group can be finally relatively accurately obtained.

In a possible implementation, obtaining the assessment values of the plurality of first videos based on the new parameters of the first video group and the watch times of the plurality of first videos includes: performing a second affine transformation operation on a watch time of a target video, a preset hyperparameter, and the new parameters of the first video group, to obtain an assessment value of the target video, where the target video is any one of the plurality of first videos. In the foregoing implementation, for any one of the plurality of first videos, that is, the target video, the second affine transformation operation may be performed on the preset hyperparameter (used to control duration bias sensitivity and noise watching sensitivity), the watch time of the target video, and the new parameters of the first video group (including the new duration bias items and the noise watching items of the first video group), to obtain the assessment value of the target video. In this case, for another first video, the operation performed on the target video may also be performed on the another first video. Therefore, assessment values of all first videos in the first video group can be finally obtained. It can be learned that a watch time of each video in a video group and parameters of the video group are processed by controlling parameter sensitivity, to more accurately perform video assessment.

In a possible implementation, the first affine transformation operation includes at least one of the following: a subtraction operation and a division operation. In the foregoing implementation, the first affine transformation operation performed for the target video may include one or more of the subtraction operation and the division operation.

In a possible implementation, the second affine transformation operation includes at least one of the following: an exponential operation, a subtraction operation, a multiplication operation, and a division operation. In the foregoing implementation, the first affine transformation operation performed for the target video may include one or more of the exponential operation, the subtraction operation, the multiplication operation, and the division operation.

In a possible implementation, the second video group includes a plurality of second videos, durations of the plurality of first videos are within a preset first (duration) range, durations of the plurality of second videos are within a preset second (duration) range, and the first range and the second range do not overlap each other. In the foregoing implementation, the batch of videos may be divided into a plurality of video groups based on video durations, and the plurality of video groups are in a one-to-one correspondence with a plurality of duration ranges that do not overlap each other. It can be learned that the first video group in the plurality of video groups includes the plurality of first videos, the durations of the plurality of first videos are within the first duration range, the second video group in the plurality of video groups includes the plurality of second videos, the durations of the plurality of second videos are within the second duration range, and the first duration range and the second duration range do not overlap each other.

According to a second aspect, an embodiment of this application provides a video assessment apparatus. The apparatus includes: a first obtaining module, configured to obtain a first video group, where the first video group includes a plurality of first videos; a processing module, configured to process watch times of the plurality of first videos, to obtain parameters of the first video group, where the parameters of the first video group indicate biases of the watch times of the plurality of first videos and noise of the watch times of the plurality of first videos; and a second obtaining module, configured to obtain assessment values of the plurality of first videos based on the parameters of the first video group and the watch times of the plurality of first videos, where the assessment values of the plurality of first videos indicate degrees of interest to a user for the plurality of first videos.

It can be learned from the foregoing apparatus that when the plurality of video groups need to be assessed, the first video group including the plurality of first videos may be first obtained from the plurality of video groups. Then, the watch times of the plurality of first videos may be processed, to obtain the parameters of the first video group. Next, the parameters of the first video group and the watch times of the plurality of first videos may be further processed, to obtain the assessment values of the plurality of first videos. This is equivalent to obtaining the degrees of interest to the user for the plurality of first videos. An operation similar to the operation performed on the first video group may also be performed on another video group in the plurality of video groups. Therefore, the assessment values of all the videos in the plurality of video groups can be obtained, to complete an assessment task for the plurality of video groups. In the foregoing process, when the plurality of first videos are assessed by using the watch times of the plurality of first videos included in the first video group and the parameters of the first video group, because the parameters of the first video group include the duration bias items of the first video group and the noise watching items of the first video group, the biases of the watch times of the plurality of first videos and the noise of the watch times of the plurality of first videos are all considered in an assessment process. Factors considered in this assessment manner are relatively comprehensive, and may relatively conform to an actual case. Therefore, the assessment values that are of the plurality of first videos and that are obtained in this assessment manner have relatively high accuracy, so that the degrees of interest to the user for the plurality of first videos can be accurately obtained.

In a possible implementation, the processing module is configured to process the watch times of the plurality of first videos by using a Gaussian mixture model, to obtain the parameters of the first video group.

In a possible implementation, the second obtaining module is configured to:

perform a moving average operation on the parameters of the first video group and parameters of the second video group, to obtain new parameters of the first video group, where the new parameters of the first video group indicate new biases of the watch times of the plurality of first videos and new noise of the watch times of the plurality of first videos; and

obtain the assessment values of the plurality of first videos based on the new parameters of the first video group and the watch times of the plurality of first videos.

In a possible implementation, the second obtaining module is configured to perform a first affine transformation operation on a watch time of a target video and the new parameters of the first video group, to obtain an assessment value of the target video, where the target video is any one of the plurality of first videos.

In a possible implementation, the second obtaining module is configured to perform a second affine transformation operation on a watch time of a target video, a preset hyperparameter, and the new parameters of the first video group, to obtain an assessment value of the target video, where the target video is any one of the plurality of first videos.

In a possible implementation, the first affine transformation operation includes at least one of the following: a subtraction operation and a division operation.

In a possible implementation, the second affine transformation operation includes at least one of the following: an exponential operation, a subtraction operation, a multiplication operation, and a division operation.

In a possible implementation, the second video group includes a plurality of second videos, durations of the plurality of first videos are within a preset first range, durations of the plurality of second videos are within a preset second range, and the first range and the second range do not overlap each other.

According to a third aspect, an embodiment of this application provides a video assessment apparatus. The apparatus includes a memory and a processor. The memory stores code, and the processor is configured to execute the code. When the code is executed, the video assessment apparatus performs the method according to the first aspect or any one of the possible implementations of the first aspect.

According to a fourth aspect, an embodiment of this application provides a circuit system. The circuit system includes a processing circuit, and the processing circuit is configured to perform the method according to the first aspect or any one of the possible implementations of the first aspect.

According to a fifth aspect, an embodiment of this application provides a chip system. The chip system includes a processor, configured to invoke a computer program or computer instructions stored in a memory, so that the processor performs the method according to the first aspect or any one of the possible implementations of the first aspect.

In a possible implementation, the processor is coupled to the memory through an interface.

In a possible implementation, the chip system further includes a memory. The memory stores a computer program or computer instructions.

According to a sixth aspect, an embodiment of this application provides a computer storage medium. The computer storage medium stores a computer program. When the program is executed by a computer, the computer is enabled to perform the method according to the first aspect or any one of the possible implementations of the first aspect.

According to a seventh aspect, an embodiment of this application provides a computer program product. The computer program product stores instructions. When the instructions are executed by a computer, the computer is enabled to perform the method according to the first aspect or any one of the possible implementations of the first aspect.

In embodiments of this application, when a plurality of video groups need to be assessed, a first video group including a plurality of first videos may be first obtained from the plurality of video groups. Then, watch times of the plurality of first videos may be processed, to obtain parameters of the first video group. Next, the parameters of the first video group and the watch times of the plurality of first videos may be further processed, to obtain assessment values of the plurality of first videos. This is equivalent to obtaining degrees of interest to a user for the plurality of first videos. An operation similar to the operation performed on the first video group may also be performed on another video group in the plurality of video groups. Therefore, assessment values of all videos in the plurality of video groups can be obtained, to complete an assessment task for the plurality of video groups. In the foregoing process, when the plurality of first videos are assessed by using the watch times of the plurality of first videos included in the first video group and the parameters of the first video group, because the parameters of the first video group include duration bias items of the first video group and noise watching items of the first video group, biases of the watch times of the plurality of first videos and noise of the watch times of the plurality of first videos are all considered in an assessment process. Factors considered in this assessment manner are relatively comprehensive, and may relatively conform to an actual case. Therefore, the assessment values that are of the plurality of first videos and that are obtained in this assessment manner have relatively high accuracy, so that the degrees of interest to the user for the plurality of first videos can be accurately obtained.

## BRIEF DESCRIPTION OF DRAWINGS

FIG. 1 is a diagram of a structure of an artificial intelligence main framework;
FIG. 2a is a diagram of a structure of a video assessment system according to an embodiment of this application;
FIG. 2b is another diagram of a structure of a video assessment system according to an embodiment of this application;
FIG. 2c is a diagram of a related device of video assessment according to an embodiment of this application;
FIG. 3 is a diagram of an architecture of a system 100 according to an embodiment of this application;
FIG. 4 is a schematic flowchart of a video assessment method according to an embodiment of this application;
FIG. 5 is a diagram of a duration bias according to an embodiment of this application;
FIG. 6 is a diagram of noise watching according to an embodiment of this application;
FIG. 7 is a diagram of a structure of a video assessment apparatus according to an embodiment of this application;
FIG. 8 is a diagram of a structure of an execution device according to an embodiment of this application;
FIG. 9 is a diagram of a structure of a training device according to an embodiment of this application; and
FIG. 10 is a diagram of a structure of a chip according to an embodiment of this application.

## DESCRIPTION OF EMBODIMENTS

Embodiments of this application provide a video assessment method and a related device thereof, to accurately assess a plurality of videos, thereby accurately obtaining degrees of interest to a user for the plurality of videos.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

With the emergence of video content platforms, more users are exposed to and watch various videos in their daily life. Accurate video recommendation plays an important role in meeting user requirements and participation. Therefore, a neural network model used to complete video recommendation emerges. In a model training process, the model learns degrees of interest to a user for a plurality of videos, so that the model can more accurately complete video recommendation.

A watch time of a video is one of important indicators for measuring a degree of interest to the user for the video. In a related technology, watch times of a plurality of videos may be calculated, to obtain a mean value of the watch times of the plurality of videos and a variance of the watch times of the plurality of videos. Then, further calculation is performed on the watch times of the plurality of videos, the mean value of the watch times of the plurality of videos, and the variance of the watch times of the plurality of videos, to obtain assessment values of the plurality of videos. The assessment values of the plurality of videos indicate degrees of interest to the user for the plurality of videos. The calculation process is expressed in the following formula:

$$r = \frac{w - \mu}{\sigma} \qquad\qquad (1)$$

In the foregoing formula, $w$ is a watch time of a specific video in the plurality of videos, $\mu$ is a mean value of the watch times of the plurality of videos, $\sigma$ is a variance of the watch times of the plurality of videos, and $r$ is an assessment value of the video, that is, a degree of interest to the user for the video.

In the foregoing process, when the assessment values of the plurality of videos are obtained based on the watch times of the plurality of videos, it is assumed that the degrees of interest to the user for the plurality of videos comply with Gaussian distribution. Factors considered in this setting are relatively single and do not conform to an actual case. Consequently, the obtained assessment values of the plurality of videos are not accurate enough. In other words, the degrees of interest to the user for the plurality of videos cannot be accurately obtained.

To resolve the foregoing problem, an embodiment of this application provides a video assessment method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a manner similar to human intelligence. Using artificial intelligence for data processing is a common application of artificial intelligence.

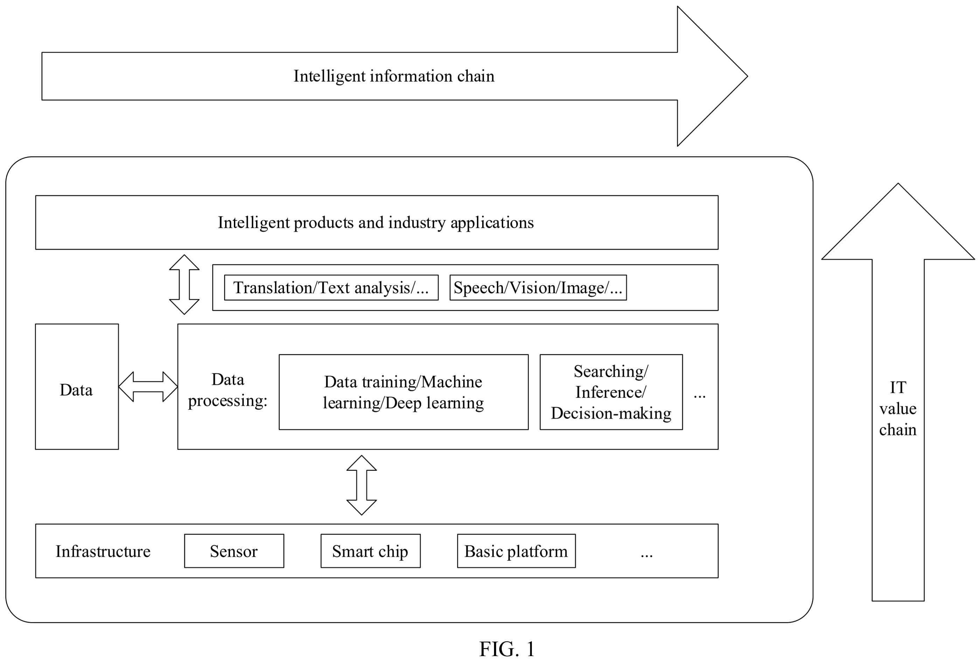

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a legacy device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Intelligent products and industry applications

The intelligent products and industry applications are products and applications of the artificial intelligence system in various fields, and are encapsulation for an overall artificial intelligence solution, so that decision making for intelligent information is productized and the applications are implemented. Application fields thereof mainly include an intelligent terminal, intelligent transportation, intelligent healthcare, autonomous driving, a smart city, and the like.

The following describes several application scenarios of this application.

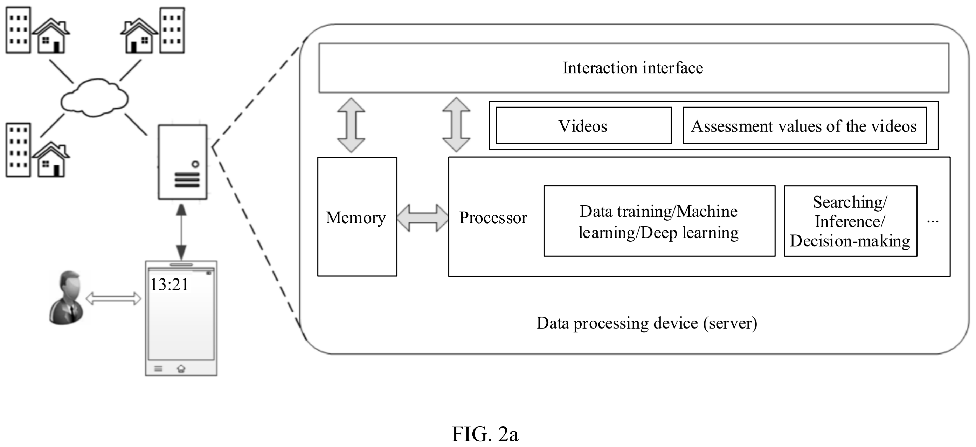

FIG. 2a is a diagram of a structure of a video assessment system according to an embodiment of this application. The video assessment system includes user equipment and a data processing device. The user equipment includes an intelligent terminal such as a mobile phone, a personal computer, an in-vehicle computer, or a video assessment center. The user equipment may serve as an initiator end of video assessment and an initiator of a video assessment request. Generally, the user initiates a request by using the user equipment.

The data processing device may be a device or a server that has a data processing function, for example, a cloud server, a network server, an application server, or a management server. The data processing device receives a video assessment request from the intelligent terminal by using an interaction interface, performs video assessment in a manner such as calculation by using a data storage memory and a data processing processor, and then performs neural network model application (including model training and model application) in manners such as machine learning, deep learning, searching, inference, and decision-making based on a video assessment result. The memory in the data processing device may be a general name, and includes a local storage and a database that stores historical data. The database may be on the data processing device, or may be on another network server.

In the video assessment system shown in FIG. 2a, the user equipment may receive an instruction of a user. For example, the user equipment may obtain one or more videos input/selected by the user, and then initiate a video assessment request to the data processing device, so that the data processing device executes video assessment application for these videos obtained by the user equipment, to obtain assessment values for these videos. For example, the user equipment may obtain the plurality of videos input or selected by the user, and then initiate the video assessment request for the plurality of videos to the data processing device, so that the data processing device assesses the plurality of videos, to obtain the assessment values of the plurality of videos, that is, degrees of interest to the user for the plurality of videos. In a subsequent process, the data processing device may complete training of a recommendation model based on the assessment values of the plurality of videos, and may further recommend a video to the user by using the recommendation model.

In FIG. 2a, the data processing device may perform the video assessment method in embodiments of this application.

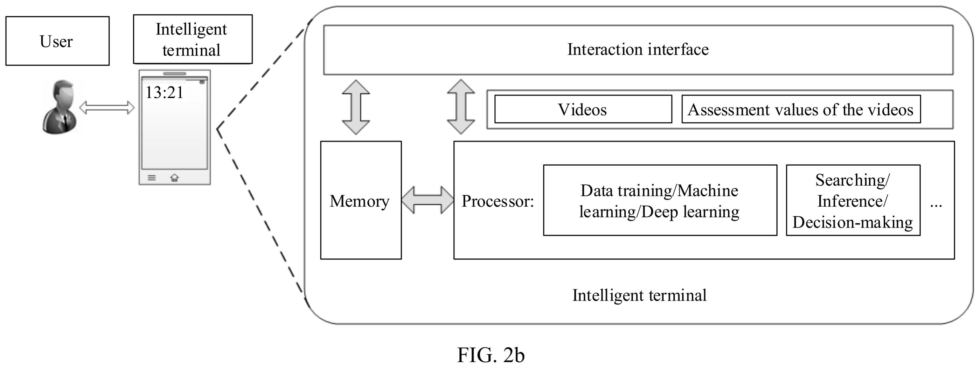

FIG. 2b is another diagram of a structure of a video assessment system according to an embodiment of this application. In FIG. 2b, user equipment directly serves as a data processing device. The user equipment can directly obtain an input from a user and directly process the input by using hardware of the user equipment. A specific process is similar to that in FIG. 2a. For details, refer to the foregoing descriptions. Details are not described herein again.

In the video assessment system shown in FIG. 2b, the user equipment may receive an instruction of the user. For example, the user equipment may obtain a plurality of videos input or selected by the user, and then assess the plurality of videos, to obtain assessment values of the plurality of videos, that is, degrees of interest to the user for the plurality of videos. In a subsequent process, the user equipment may return the assessment values of the plurality of videos to the data processing device, so that the data processing device completes training of a recommendation model based on the assessment values of the plurality of videos. Further, the recommendation model is deployed in the user equipment. Therefore, the user equipment can recommend a video to the user by using the recommendation model.

In FIG. 2b, the user equipment may perform the video assessment method in embodiments of this application.

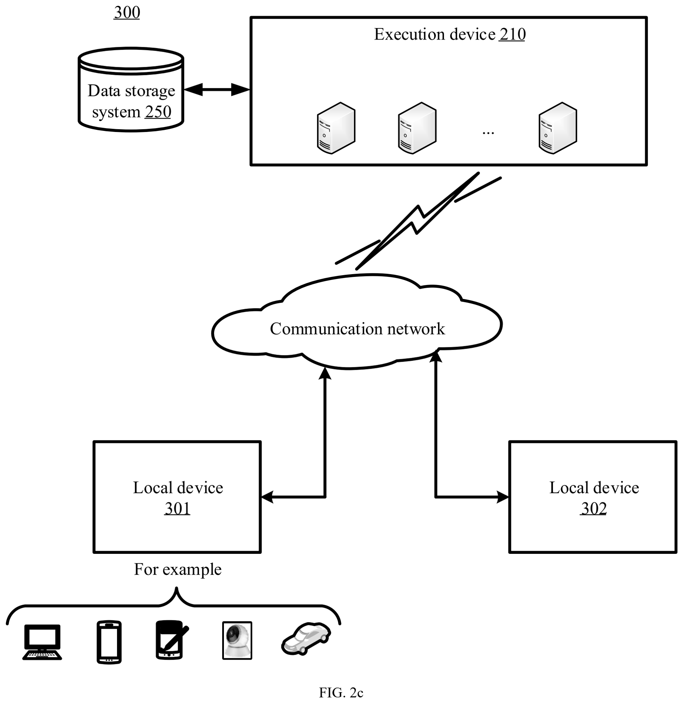

FIG. 2c is a diagram of a related device of video assessment according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data assessment by using some models (for example, a support vector machine-based model or a Gaussian mixture model), perform data training/machine learning/deep learning on a neural network model based on a data assessment result, and execute video recommendation application for a user by using a model obtained through final training or learning, to obtain a corresponding recommendation result.

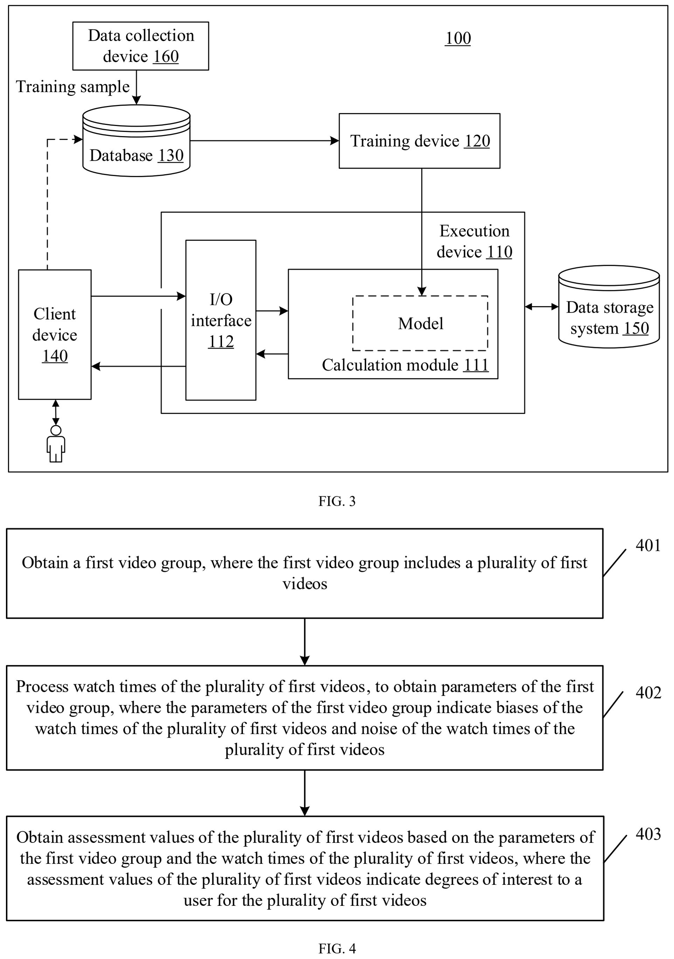

FIG. 3 is a diagram of an architecture of a system 100 according to an embodiment of this application. In FIG. 3, an execution device 110 is provided with an input/output (input/output, I/O) interface 112, configured to exchange data with an external device. A user may input data to the I/O interface 112 by using a client device 140. The input data in embodiments of this application may include: each to-be-scheduled task, callable resources, and another parameter.

In a process in which the execution device 110 preprocesses the input data, or in a process in which a calculation module 111 of the execution device 110 performs related processing such as calculation (for example, implements a function of a neural network in this application), the execution device 110 may invoke data, code, and the like in a data storage system 150 for corresponding processing, and may also store, into the data storage system 150, data, instructions, and the like that are obtained through corresponding processing.

Finally, the I/O interface 112 returns a processing result to a client device 140, to provide the processing result for the user.

It should be noted that, when the training device 120 is scheduled by the execution device 110, the training device 120 may generate corresponding target models/rules for different targets or different tasks based on different training data. The corresponding target models/rules may be used to implement the foregoing targets or complete the foregoing tasks, to provide a needed result for the user. The training data may be stored in a database 130, and comes from a training sample collected by a data collection device 160.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of an architecture of a system according to an embodiment of this application. A position relationship between the devices, the components, the modules, and the like shown in the figure does not constitute any limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete calculation work of the calculation module 111.

The neural network processing unit NPU serves as a coprocessor, and may be mounted on a host central processing unit (central processing unit, CPU) (host CPU). The host CPU assigns a task. A core part of the NPU is an arithmetic circuit, and a controller controls the arithmetic circuit to extract data in a memory (a weight memory or an input memory) and perform an operation.

In some implementations, the arithmetic circuit includes a plurality of processing engines (process engine, PE). In some implementations, the arithmetic circuit is a two-dimensional systolic array. The arithmetic circuit may alternatively be a one-dimensional systolic array or another electronic circuit capable of performing mathematical operations such as multiplication and addition. In some implementations, the arithmetic circuit is a general-purpose matrix processor.

For example, it is assumed that there is an input matrix A, a weight matrix B, and an output matrix C. The arithmetic circuit fetches, from a weight memory, data corresponding to the matrix B, and caches the data on each PE in the arithmetic circuit. The arithmetic circuit fetches data of the matrix A from the input memory, and performs a matrix operation on the data and the matrix B, and stores an obtained partial result or an obtained final result of the matrix in an accumulator (accumulator).

A vector calculation unit may perform further processing on an output of the arithmetic circuit, for example, vector multiplication, vector addition, exponential operation, logarithmic operation, and value comparison. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified cache. For example, the vector calculation unit may apply a nonlinear function to an output, for example, a vector of an accumulated value, of the arithmetic circuit to generate an activation value. In some implementations, the vector calculation unit generates a normalized value, a combined value, or both a normalized value and a combined value. In some implementations, the processed output vector can be used as an activation input to the arithmetic circuit, for example, the processed output vector can be used at a subsequent layer of the neural network.

A unified memory is configured to store input data and output data.

For weight data, a direct memory access controller (direct memory access controller, DMAC) directly transfers input data from an external memory to the input memory and/or the unified memory, stores, in the weight memory, weight data in the external memory, and stores, in the external memory, data in the unified memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions buffered in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}\left(x\right) = f\left(W^{T}x\right) = f(\sum\nolimits_{s=1}^{n} W_s x_s + b) \qquad (2)$$

Herein, s=1, 2, ..., n; n is a natural number greater than 1; $W_s$ is a weight of $x_s$; b is a bias of the neuron; and f is an activation function (activation functions) of the neuron, and is used to introduce a nonlinear feature into the neural network, to convert an input signal in the neuron into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx + b)$. From a physical layer, work at each layer of the neural network may be understood as completing transformation from input space to output space (namely, from row space to column space of a matrix) by performing five operations on the input space (a set of input vectors). The five operations include: 1. dimension increasing/dimension reduction; 2. scaling up/scaling down; 3. rotation; 4. translation; and 5. "bending". The operation 1, the operation 2, and the operation 3 are completed by *Wx,* the operation 4 is completed by *+b,* and the operation 5 is completed by *a*(). The word "space" is used herein for expression because a classified object is not a single thing, but a type of thing. Space is a set of all individuals of this type of thing. Herein, *W* is a weight vector, and each value in the vector indicates a weight value of one neuron at this layer of the neural network. The vector *W* determines space transformation from the input space to the output space described above. In other words, a weight *W* at each layer controls how to transform space. A purpose of training the neural network is to finally obtain a weight matrix (a weight matrix formed by vectors *W* at a plurality of layers) at all layers of a trained neural network. Therefore, a training process of the neural network is essentially a manner of learning of control of space transformation, and more specifically, learning of a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, the neural network may correct a value of a parameter in an initial neural network model by using an error back propagation (back propagation, BP) algorithm, so that a reconstruction error loss of the neural network model becomes increasingly small. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

The following first briefly describes a video assessment method provided in this application.

The video assessment method provided in this embodiment of this application may be used to assess a batch of videos, to obtain (actual) assessment values of the batch of videos, that is, (actual) degrees of interest to a user for the batch of videos. Then, a batch of training data may be correspondingly generated. The batch of training data includes features of the user and features of the batch of videos. The assessment values of the batch of videos are used as labels of the batch of training data. In this way, the batch of training data may be input into a to-be-trained model, to obtain predicted assessment values of the batch of videos, that is, predicted degrees of interest to the user for the batch of videos. With reference to the actual assessment values of the batch of videos and the predicted assessment values of the batch of videos, a parameter of the to-be-trained model may be updated, to obtain a to-be-trained model obtained after the parameter is updated. A next batch of training data is generated in a same manner. The to-be-trained model obtained after the parameter is updated is further trained, to obtain a recommendation model, thereby recommending a video to the user by using the recommendation model.

To further understand the video assessment method provided in embodiments of this application, the following further describes the method with reference to FIG. 4. FIG. 4 is a schematic flowchart of a video assessment method according to an embodiment of this application. As shown in FIG. 4, the method includes the following steps.

401: Obtain a first video group, where the first video group includes a plurality of first videos.

In this embodiment, when video assessment needs to be performed, a batch of videos may be obtained first, and the batch of videos are divided into a plurality of video groups. Each video group includes a plurality of videos. It should be noted that the batch of videos may be divided into the plurality of video groups according to durations of the videos. Specifically, a plurality of preset duration ranges that do not overlap each other may be obtained first. For any one of the plurality of duration ranges, in the batch of videos, all videos whose durations are within the duration range form a corresponding video group. This is also true for another duration range in the plurality of duration ranges. Therefore, a plurality of video groups that are in a one-to-one correspondence with the plurality of duration ranges can be finally obtained.

Because operations performed on all the video groups are similar, for ease of description, the following uses one of the plurality of video groups as an example for description. The video group is referred to as the first video group. A plurality of videos included in the video group are referred to as the plurality of first videos. A duration range corresponding to the video group is referred to as a first duration range. In other words, the first video group includes the plurality of first videos, and durations of the plurality of first videos are within the first duration range.

For example, it is assumed that there are a batch of videos, and the batch of videos include 100 videos. In the 100 videos, a video whose duration is the shortest is 5 minutes and 1 second, and a video whose duration is the longest is 20 minutes and 30 seconds. In this case, a plurality of duration ranges may be set. The 1st duration range is 5 minutes to 6 minutes, the 2nd duration range is 6 minutes to 7 minutes, ..., and a 16th duration range is 20 minutes to 21 minutes. Therefore, the 100 videos may be divided into 16 video groups according to durations. The 1st video group includes four videos, and durations of the four videos are all between 5 minutes and 6 minutes; the 2nd video group includes 10 videos, and durations of the 10 videos are all between 6 minutes and 76 minutes; and so on. The 16th video group includes three videos, and durations of the three videos are all between 20 minutes and 21 minutes. For ease of description, in this example, the following uses an ith video group as an example for illustrative description, where i=1, ..., 16.

402: Process watch times of the plurality of first videos, to obtain parameters of the first video group, where the parameters of the first video group indicate biases of the watch times of the plurality of first videos and noise of the watch times of the plurality of first videos.

After the first video group is obtained, the watch times of the plurality of first videos included in the first video group may be processed, to obtain the parameters of the first video group. The parameters of the first video group include duration bias items of the first video group and noise watching items of the first video group. The duration bias items of the first video group indicate biases of the watch times of the plurality of first videos. The noise watching items of the first video group indicate noise of the watch times of the plurality of first videos.

Specifically, the parameters of the first video group may be obtained in the following manner.

Processing the watch times of the plurality of first videos, to obtain the parameters of the first video group includes:

After the first video group is obtained, the watch times of the plurality of first videos in the first video group may be obtained from each video platform. It is assumed that both the duration bias items and the noise watching items comply with specific distribution, for example, Gaussian mixture distribution. Therefore, the watch times of the plurality of first videos may be input to a Gaussian mixture model, so that the watch times of the plurality of first videos are processed by using the Gaussian mixture model, to obtain the parameters of the first video group through estimation, that is, the duration bias items of the first video group and the noise watching items of the first video group.

Still in the foregoing example, for the ith video group, it is assumed that the ith video group includes M videos (M is a positive integer greater than or equal to 1), and watch times of the M videos may be processed by using the Gaussian mixture model, to obtain a duration bias $w_i^+$ and noise watching $w_i^-$ of the ith video group.

403: Obtain assessment values of the plurality of first videos based on the parameters of the first video group and the watch times of the plurality of first videos, where the assessment values of the plurality of first videos indicate degrees of interest to a user for the plurality of first videos.

After the parameters of the first video group are obtained, the parameters of the first video group and the watch times of the plurality of first videos included in the first video group may be further processed, to obtain actual assessment values of the plurality of first videos included in the first video group. Actual assessment values of the plurality of first videos indicate actual degrees of interest to a user for the plurality of first videos. This is equivalent to obtaining the actual degrees of interest to the user for the plurality of first videos.

It should be noted that, for a video group other than the first video group in the plurality of video groups, an operation similar to that performed on the first video group may also be performed on the video group. Therefore, actual assessment values of all videos in the plurality of video groups can be obtained, that is, actual assessment values of all videos in the batch of videos, namely, actual degrees of interest to the user for all the videos in the batch of videos.

Specifically, the actual assessment values (that is, the foregoing assessment values) of the plurality of first videos may be obtained in the following manner:

(1) In the plurality of video groups, in order that the parameters of the first video group are similar to parameters of a second video group (in the plurality of video groups, the first video group and the second video group are two video groups that are close to each other), specific processing may be performed on the parameters of the first video group. The processing includes: After the parameters of the first video group are obtained, the parameters of the second video group may be correspondingly obtained (for a process of obtaining the parameters of the second video group, reference may be made to a process of obtaining the parameters of the first video group, and details are not described herein again). It should be noted that the second video group is another video group in the plurality of video groups, a plurality of videos included in the video group may be referred to as a plurality of second videos, and a duration range corresponding to the video group may be referred to as a second duration range. In other words, the second video group includes the plurality of second videos, and durations of the plurality of second videos are within the second duration range. It can be learned based on the foregoing definition of the plurality of duration ranges that the first duration range and the second duration range do not overlap each other.

After the parameters of the first video group and the parameters of the second video group are obtained, a moving average operation may be performed on the parameters of the first video group, a quantity of the plurality of first videos, the parameters of the second video group, and a quantity of the plurality of second videos, to obtain new parameters of the first video group. The new parameters of the first video group include new duration bias items of the first video group and new noise watching items of the first video group. The new duration bias items of the first video group indicate new biases of the watch times of the plurality of first videos. The new noise watching items of the first video group indicate new noise of the watch times of the plurality of first videos.

Still in the foregoing example, the duration bias $w_i^+$ and the noise watching $w_i^-$ of the ith video group are obtained. The duration bias $w_i^+$ and the noise watching $w_i^-$ of the ith video group may be processed by using the following formula, to obtain a new duration bias of the ith video group and new noise watching of the ith video group:

$$\tilde{w}_i^+ = \frac{|D_{i-T}| w_{i-T}^+ + ... + |D_i| w_i^+ + ... + |D_{i+T}| w_{i+T}^+}{|D_{i-T}| + ... + |D_i| + ... + |D_{i+T}|}$$
$$\tilde{w}_i^- = \frac{|D_{i-T}| w_{i-T}^- + ... + |D_i| w_i^- + ... + |D_{i+T}| w_{i+T}^-}{|D_{i-T}| + ... + |D_i| + ... + |D_{i+T}|} \qquad (3)$$

In the foregoing formula, $\tilde{w}_i^+$ is the new duration bias of the ith video group, $\tilde{w}_i^-$ is the new noise watching of the ith video group, $D_i$ is a quantity of all videos included in the ith video group, $w_{i-T}^+$ is a duration bias of an (i-T)th video group (T is a positive integer greater than or equal to 1), $w_{i-T}^-$ is noise watching of the (iT)th video group, $D_{i-T}$ is a quantity of all videos included in the (i-T)th video group, $w_{i+T}^+$ is a duration bias of an (i+T)th video group, $w_{i+T}^-$ is noise watching of the (i+T)th video group, and $D_{i+T}$ is a quantity of all videos included in the (i+T)th video group.

(2) After the new parameters of the first video group are obtained, calculation may be performed on the new parameters of the first video group and the watch times of the plurality of first videos, to obtain the actual assessment values of the plurality of first videos.

More specifically, calculation may be performed on the new parameters of the first video group and the watch times of the plurality of first videos in the following manners, to obtain the actual assessment values of the plurality of first videos.

(2.1) Operations performed on all the first videos are similar. Therefore, the following uses any one of the plurality of first videos as an example for illustrative description, and the first video is referred to as a target video. In this case, a first affine transformation operation (for example, the first affine transformation operation may include one or more of a subtraction operation and a division operation) may be performed on a watch time of the target video and the new parameters of the first video group, to obtain the actual assessment value of the target video.

In this case, for another first video, the operation performed on the target video may also be performed on the another first video. Therefore, actual assessment values of all first videos in the first video group can be finally obtained.

Still in the foregoing example, the new duration bias $\tilde{w}_i^+$ of the ith video group and the new noise watching $\tilde{w}_i^-$ of the ith video group are obtained. Calculation may be performed on a watch time of a jth video in the ith video group based on the two parameters by using the following formula, to obtain an assessment value of the jth video:

$$r_{i,j}^A = \frac{w_{i,j} - \tilde{w}_i^-}{\tilde{w}_i^+ - \tilde{w}_i^-} \qquad (4)$$

In the foregoing formula, $r_{i,j}^A$ is the assessment value of the jth video in the ith video group, and $w_{i,j}$ is the watch time of the jth video in the ith video group.

(2.2) Because it is difficult to estimate a relatively good duration bias item and a relatively good noise watching item by using the Gaussian mixture model, it can be learned through analysis that sensitivity of the duration bias item increases with the watch time, and sensitivity of the noise watching item decreases with the watch time. In this case, a preset hyperparameter may be obtained to implement sensitivity control on the duration bias item and the noise watching item. After the preset hyperparameter is obtained, a second affine transformation operation (for example, the second affine transformation operation may include one or more of an exponential operation, a subtraction operation, a multiplication operation, and a division operation) may be performed on the watch time of the target video, the preset hyperparameter, and the new parameters of the first video group, to obtain an assessment value of the target video.

In this case, for another first video, the operation performed on the target video may also be performed on the another first video. Therefore, the actual assessment values of all first videos in the first video group can be finally obtained.

Still in the foregoing example, the new duration bias $\tilde{w}_i^+$ of the $i^{th}$ video group and the new noise watching $\tilde{w}_i^-$ of the $i^{th}$ video group are obtained. The preset hyperparameter $\alpha$ may be obtained. Calculation may be performed on the watch time of the $j^{th}$ video in the $i^{th}$ video group based on the three parameters by using the following formula, to obtain the assessment value of the $j^{th}$ video:

$$r_{i,j}^S = \frac{\exp(\alpha w_{i,j}) - \exp(\alpha \tilde{w}_i^-)}{\exp(\alpha \tilde{w}_i^+) - \exp(\alpha \tilde{w}_i^-)} \tag{5}$$

In the foregoing formula, exp() represents an exponential operation with e as a base.

Further, after actual assessment values of the batch of videos are obtained, that is, actual degrees of interest to the user for the batch of videos, a batch of training data may be correspondingly generated. The batch of training data includes features of the user and features of the batch of videos. The assessment values of the batch of videos are used as labels of the batch of training data. In this way, the batch of training data may be input into a to-be-trained model, to obtain predicted assessment values of the batch of videos, that is, predicted degrees of interest to the user for the batch of videos. Then, calculation may be performed on the actual assessment values of the batch of videos and the predicted assessment values of the batch of videos by using a preset loss function, to obtain target losses. The target losses indicate differences between the actual assessment values of the batch of videos and the predicted assessment values of the batch of videos.

Then, a parameter of the to-be-trained model may be updated based on the target losses, to obtain a to-be-trained model obtained after the parameter is updated. A next batch of training data is generated in a same manner. The to-be-trained model obtained after the parameter is updated is further trained, to obtain a recommendation model, thereby recommending a video to the user by using the recommendation model.

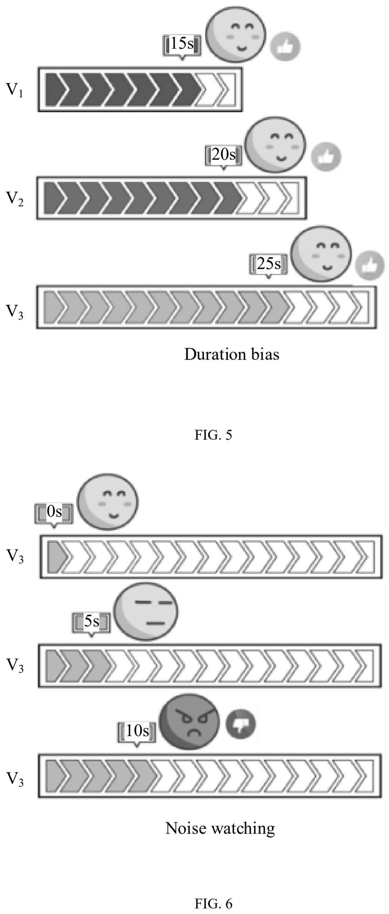

To further understand the video assessment method provided in embodiments of this application, the following further describes the method based on a specific application example. As shown in FIG. 5 and FIG. 6 (FIG. 5 is a diagram of a duration bias according to an embodiment of this application, and FIG. 6 is a diagram of noise watching according to an embodiment of this application), in this application example, a watch time of a video is considered as a mixture of a degree of interest to a user for the video, a duration bias, and noise watching. The duration bias means that the user spends more time to watch a long video of interest to the user, causing a longer average watch time of the long video. This phenomenon is referred to as a duration bias. For example, the user has a same degree of interest for three videos v1, v2, and v3, but durations of the three videos are different. The user watches v3 (the duration of v3 is longer) for a relatively long time. Noise watching means that the user needs time to determine whether the user likes a recommended video and may watch a video of no interest for a short period of time. This is usually referred to noise watching. In essence, noise watching is caused because the user trusts in clickbait content at the beginning of a video. For example, it is assumed that v1, v2, and v3 are videos of no interest to the user. Because of induction of the content at the beginning of the video, the user spends time watching a video of no interest.

On this basis, the application example provides a watch time correction model for de-biasing and de-noising. In this model, distribution of watch times of videos in each bucket is considered as a mixture of bias distribution and noise distribution, and parameters in the potential distribution are estimated by using the Gaussian mixture model. In addition, because adjacent buckets have similar attributes, frequency moving average is used to smoothly estimate a bias parameter sequence and a noise parameter sequence. In addition, a correction function module of sensitivity control is further designed. This facilitates estimation of bias and noise parameters.

Specifically, the application example includes:

Input is exchanged data $D = \{(x_t, w_t, d_t)\}_{t=1}^N$, a moving average window $T$, and a hyperparameter $\alpha$, where $x_t$ is a feature of a user and a feature of a $t^{th}$ video (from the $t^{th}$ video), $w_t$ is a watch time of the $t^{th}$ video, and $d_t$ is a duration of the $t^{th}$ video.

Output is a video assessment value $R$.

1: Obtain each calculation formula, including $w^+ \leftarrow \{\}$, $w^- \leftarrow \{\}$, and $R \leftarrow \{\}$.
2: Bucket N videos included in $D$ according to durations $d$ of the videos, to obtain M buckets (M video groups).

3: Use watch times $w_1,..., w_N$ of the N videos included in $D$ as an input of the Gaussian mixture model, to estimate duration biases $w_1^+,..., w_N^+$ and noise watching $w_1^-,..., w_N^-$ of the buckets.

4: Perform moving average on $w_1^+,..., w_N^+$ based on $T$ to obtain a new duration bias $\tilde{w}_1^+,..., \tilde{w}_N^+$, and perform moving average on $w_1^-,..., w_N^-$ based on $T$ to obtain new noise watching $\tilde{w}_1^-,..., \tilde{w}_N^-$.

5: Calculate, by using Formula (5), assessment values $r_1^S,..., r_N^S$ of all the videos for the videos included in $D$, where $r_1^S,..., r_N^S$ form $R$.

In addition, a model obtained through training based on the methods (D$^2$Co(A) and D$^2$Co(S)) provided in embodiments of this application may be further compared with a model obtained through training based on the methods (Watch Time, PCR, and the like) provided in the related technologies. Comparison results are shown in Table 1, Table 2, and Table 3.

Table 1

| | | Data set 1 | | | | Data set 2 | | | |
|---|---|---|---|---|---|---|---|---|---|
| | Technology | Indicator 1 | Indicator 2 | Indicator 3 | Indicator 4 | Indicator 1 | Indicator 2 | Indicator 3 | Indicator 4 |
| Model 1 | Watch time | J.584 | 0.402 | 0.461 | 0.501 | 0.506 | 0.538 | 0.542 | 0.547 |
| | PCR | J.626 | 0.432 | 0.482 | 0.517 | 0.532 | 0.557 | J.560 | J.565 |
| | PCR-denoise | J.636 | 0.437 | 0.487 | 0.521 | 0.532 | 0.560 | J.563 | J.567 |
| | D2Q | J.628 | 0.433 | 0.484 | 0.519 | 0.533 | 0.546 | 0.553 | J.560 |
| | D2Q-de-noise | 0.641 | 0.441 | 0.490 | 0.524 | 0.538 | 0.559 | J.563 | J.569 |
| | WTG | J.635 | 0.437 | 0.486 | 0.520 | 0.541 | 0.556 | J.562 | J.569 |
| | WTG-denoise | J.645 | 0.442 | 0.491 | 0.525 | 0.545 | 0.564 | J.567 | J.572 |
| | D$^2$Co(A) | J.650 | 0.446 | 0.493 | 0.527 | 0.551 | 0.577 | J.578 | J.583 |
| | D$^2$Co(S) | J.653 | 0.451 | 0.497 | 0.530 | 0.556 | 0.581 | J.586 | J.590 |
| | Oracle | J.664 | 0.456 | 0.502 | 0.535 | 0.556 | 0.585 | J.587 | J.590 |

Table 2

| | | Data set 1 | | | | Data set 2 | | | |
|---|---|---|---|---|---|---|---|---|---|
| | Technology | Indicator 1 | Indicator 2 | Indicator 3 | Indicator 4 | Indicator 1 | Indicator 2 | Indicator 3 | Indicator 4 |
| Model 2 | Watch time | J.593 | 0.402 | 0.464 | 0.503 | 0.506 | 0.554 | 0.555 | J.560 |
| | PCR | J.628 | 0.435 | 0.483 | 0.518 | 0.531 | 0.559 | J.562 | J.568 |
| | PCR-denoise | J.637 | 0.440 | 0.488 | 0.523 | 0.532 | 0.559 | J.562 | J.569 |
| | D2Q | J.635 | 0.437 | 0.489 | 0.522 | 0.532 | 0.550 | 0.554 | J.562 |
| | D2Q-de-noise | J.642 | 0.443 | 0.492 | 0.525 | 0.537 | 0.564 | J.565 | J.572 |
| | WTG | J.635 | 0.436 | 0.486 | 0.520 | 0.542 | 0.561 | J.564 | J.571 |

(continued)

|  | | Data set 1 | | | | Data set 2 | | | |
|---|---|---|---|---|---|---|---|---|---|
|  | WTG-de-noise | J.647 | 0.444 | 0.493 | 0.526 | 0.544 | 0.571 | J.570 | 0.577 |
|  | $D^2Co(A)$ | J.653 | 0.447 | 0.496 | 0.528 | 0.551 | 0.574 | J.576 | J.583 |
|  | $D^2Co(S)$ | J.656t | 0.451 | 0.499 | 0.532 | 0.555 | 0.587 | J.587 | J.593 |
|  | Oracle | J.666 | 0.459 | 0.505 | 0.537 | 0.556 | 0.583 | J.585 | J.591 |

Table 3

| | | Data set 1 | | | | Data set 2 | | | |
|---|---|---|---|---|---|---|---|---|---|
| | Technology | Indicator 1 | Indicator 2 | Indicator 3 | Indicator 4 | Indicator 1 | Indicator 2 | Indicator 3 | Indicator 4 |
| Model 3 | Watch time | J.592 | 0.398 | 0.461 | 0.501 | 0.506 | 0.559 | 0.557 | J.562 |
| | PCR | J.624 | 0.429 | 0.480 | 0.515 | 0.532 | 0.555 | 0.559 | J.567 |
| | PCR-denoise | J.639 | 0.441 | 0.489 | 0.524 | 0.533 | 0.561 | J.563 | J.570 |
| | D2Q | J.633 | 0.436 | 0.486 | 0.521 | 0.535 | 0.553 | 0.556 | J.564 |
| | D2Q-denoise | 0.641 | 0.438 | 0.490 | 0.524 | 0.539 | 0.563 | J.566 | J.573 |
| | WTG | J.637 | 0.437 | 0.487 | 0.521 | 0.544 | 0.562 | J.563 | J.570 |
| | WTG-denoise | J.645 | 0.441 | 0.491 | 0.525 | 0.547 | 0.569 | J.571 | J.578 |
| | $D^2Co(A)$ | J.653 | 0.448 | 0.496 | 0.529 | 0.575 | 0.578 | J.578 | J.585 |
| | $D^2Co(S)$ | J.658t | 0.453 | 0.499 | 0.532 | 0.536 | 0.581 | J.586 | J.593 |
| | Oracle | J.665 | 0.459 | 0.502 | 0.536 | 0.557 | 0.585 | J.587 | J.594 |

Based on Table 1 to Table 3, it can be learned that $D^2Co(S)$ obtains optimal performance on all models in the data set 1 and the data set 2. In addition, models trained through PCR, D2Q, and WTG have better performance than a model trained by using an original Watch Time label. These models mainly alleviate a duration bias problem. The $D^2Co(A)$ and $D^2Co(S)$ algorithms proposed in this embodiment of this application are also better than these baselines of the correction algorithm, because noise watching is modeled by using the method provided in embodiments of this application. In addition, $D^2Co(S)$ provided in embodiments of this application has better performance than $D^2Co(A)$ in the two data sets. This shows importance of sensitivity control. It should be noted that baselines with de-noising post-processing (PCR-denoise, D2Q-denoise, and WTGdenoise) have been improved to original methods in some degree. This phenomenon clearly confirms the existence of noise watching. However, de-noising post-processing is merely heuristic truncation of a sample with a relatively short watch time, and removes only a part of noise.

In this embodiment of this application, when the plurality of video groups need to be assessed, the first video group including the plurality of first videos may be first obtained from the plurality of video groups. Then, the watch times of the plurality of first videos may be processed, to obtain the parameters of the first video group. Next, the parameters of the first video group and the watch times of the plurality of first videos may be further processed, to obtain the assessment values of the plurality of first videos. This is equivalent to obtaining the degrees of interest to the user for the plurality of first videos. An operation similar to the operation performed on the first video group may also be performed on another video group in the plurality of video groups. Therefore, assessment values of all videos in the plurality of video groups can be obtained, to complete an assessment task for the plurality of video groups. In the foregoing process, when the plurality of first videos are assessed by using the watch times of the plurality of first videos included in the first video group and the parameters of the first video group, because the parameters of the first video group include duration bias items of the first video group and noise watching items of the first video group, biases of the watch times of the plurality of first videos and noise of the watch times of the plurality of first videos are all considered in an assessment process. Factors considered in this assessment manner are relatively comprehensive, and may relatively conform to an actual case. Therefore, the assessment values that are of the plurality of first videos and that are obtained in this assessment manner have relatively high accuracy, so that the degrees of interest to the user for the plurality of first videos can be accurately obtained.

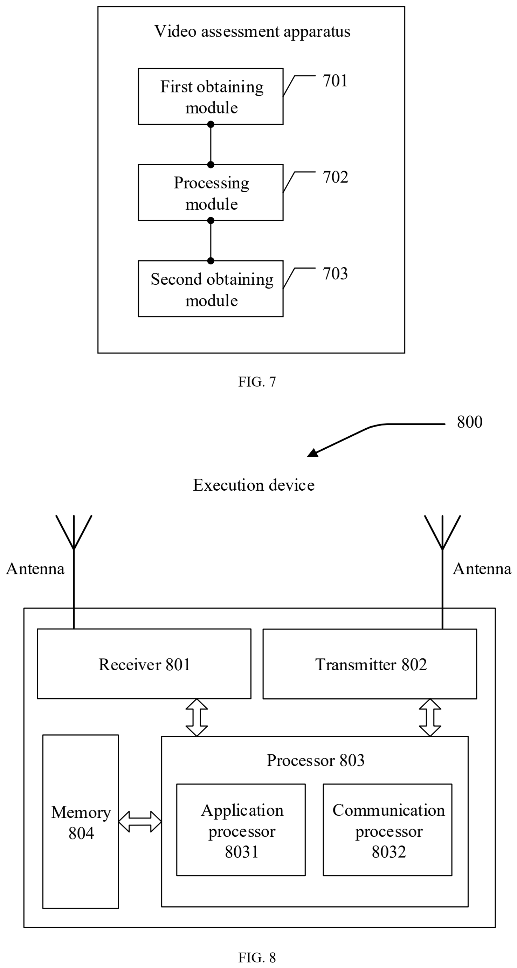

The foregoing describes in detail the video assessment method provided in embodiments of this application. The following describes a video assessment apparatus provided in embodiments of this application. FIG. 7 is a diagram of a structure of a video assessment apparatus according to an embodiment of this application. As shown in FIG. 7, the apparatus includes:

a first obtaining module 701, configured to obtain a first video group, where the first video group includes a plurality of first videos;

a processing module 702, configured to process watch times of the plurality of first videos, to obtain parameters of the first video group, where the parameters of the first video group indicate biases of the watch times of the plurality of first videos and noise of the watch times of the plurality of first videos; and

a second obtaining module 703, configured to obtain assessment values of the plurality of first videos based on the parameters of the first video group and the watch times of the plurality of first videos, where the assessment values of the plurality of first videos indicate degrees of interest to a user for the plurality of first videos.

In this embodiment of this application, when a plurality of video groups need to be assessed, the first video group including the plurality of first videos may be first obtained from the plurality of video groups. Then, the watch times of the plurality of first videos may be processed, to obtain the parameters of the first video group. Next, the parameters of the first video group and the watch times of the plurality of first videos may be further processed, to obtain the assessment values of the plurality of first videos. This is equivalent to obtaining the degrees of interest to the user for the plurality of first videos. An operation similar to the operation performed on the first video group may also be performed on another video group in the plurality of video groups. Therefore, assessment values of all videos in the plurality of video groups can be obtained, to complete an assessment task for the plurality of video groups. In the foregoing process, when the plurality of first videos are assessed by using the watch times of the plurality of first videos included in the first video group and the parameters of the first video group, because the parameters of the first video group include duration bias items of the first video group and noise watching items of the first video group, the biases of the watch times of the plurality of first videos and the noise of the watch times of the plurality of first videos are all considered in an assessment process. Factors considered in this assessment manner are relatively comprehensive, and may relatively conform to an actual case. Therefore, the assessment values that are of the plurality of first videos and that are obtained in this assessment manner have relatively high accuracy, so that the degrees of interest to the user for the plurality of first videos can be accurately obtained.

In a possible implementation, the processing module is configured to process the watch times of the plurality of first videos by using a Gaussian mixture model, to obtain the parameters of the first video group.

In a possible implementation, the second obtaining module is configured to: perform a moving average operation on the parameters of the first video group and parameters of the second video group, to obtain new parameters of the first video group, where the new parameters of the first video group indicate new biases of the watch times of the plurality of first videos and new noise of the watch times of the plurality of first videos; and obtain the assessment values of the plurality of first videos based on the new parameters of the first video group and the watch times of the plurality of first videos.

In a possible implementation, the second obtaining module is configured to perform a first affine transformation operation on a watch time of a target video and the new parameters of the first video group, to obtain an assessment value of the target video, where the target video is any one of the plurality of first videos.

In a possible implementation, the second obtaining module is configured to perform a second affine transformation operation on a watch time of a target video, a preset hyperparameter, and the new parameters of the first video group, to obtain an assessment value of the target video, where the target video is any one of the plurality of first videos.

In a possible implementation, the first affine transformation operation includes at least one of the following: a subtraction operation and a division operation.

In a possible implementation, the second affine transformation operation includes at least one of the following: an exponential operation, a subtraction operation, a multiplication operation, and a division operation.

In a possible implementation, the second video group includes a plurality of second videos, durations of the plurality of first videos are within a preset first range, durations of the plurality of second videos are within a preset second range, and the first range and the second range do not overlap each other.

It should be noted that, content such as information exchange between the modules/units of the apparatuses and an execution process is based on the same concept as the method embodiments of this application, and produces the same technical effect as the method embodiments of this application. For specific content, refer to the foregoing descriptions in the method embodiments of this application. Details are not described herein again.

An embodiment of this application further relates to an execution device. FIG. 8 is a diagram of a structure of an execution device according to an embodiment of this application. As shown in FIG. 8, the execution device 800 may be specifically represented as a mobile phone, a tablet computer, a notebook computer, an in-vehicle computer, an intelligent wearable device, a server, or the like. This is not limited herein. The video assessment apparatus described in the embodiment corresponding to FIG. 7 may be deployed on the execution device 800, and is configured to implement a video assessment function in the embodiment corresponding to FIG. 5. Specifically, the execution device 800 includes a receiver 801, a transmitter 802, a processor 803, and a memory 804 (there may be one or more processors 803 in the execution device 800, and one processor is used as an example in FIG. 8). The processor 803 may include an application processor 8031 and a communication processor 8032. In some embodiments of this application, the receiver 801, the transmitter 802, the processor 803, and the memory 804 may be connected through a bus or in another manner.

The memory 804 may include a read-only memory and a random access memory, and provide instructions and data to the processor 803. A part of the memory 804 may further include a non-volatile random access memory (non-volatile random access memory, NVRAM). The memory 804 stores a processor and operation instructions, an executable module or a data structure, a subnet thereof, or an extended set thereof. The operation instructions may include various operation instructions used to implement various operations.

The processor 803 controls an operation of the execution device. In specific application, the components of the execution device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 803, or implemented by the processor 803. The processor 803 may be an integrated circuit chip and has a signal processing capability. In an implementation process, the steps in the foregoing method may be implemented by using a hardware integrated logic circuit in the processor 803 or by using instructions in a form of software. The processor 803 may be a general-purpose processor, a digital signal processor (digital signal processing, DSP), or a microprocessor or microcontroller; or may further include an application-specific integrated circuit (application specific integrated circuit, ASIC), a field-programmable gate array (field-programmable gate array, FPGA) or another programmable logic device, a discrete gate or transistor logic device, or a discrete hardware component. The processor 803 may implement or perform methods, steps, and logical block diagrams in the method embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 804, and the processor 803 reads information in the memory 804 and completes the steps of the foregoing methods in combination with hardware of the processor.

The receiver 801 may be configured to: receive input digital or character information, and generate a signal input related to a related setting and function control of the execution device. The transmitter 802 may be configured to output digital or character information through a first interface. The transmitter 802 may be further configured to send instructions to a disk pack through the first interface, to modify data in the disk pack. The transmitter 802 may further include a display device, for example, a display.

In this embodiment of this application, in a case, the processor 803 is configured to: obtain assessment values of a plurality of videos by using the video assessment function in the embodiment corresponding to FIG. 5, use the assessment values as labels of training data (including a feature of a user, a feature of a video, and the like), and invoke a training device to complete training of a recommendation model. Then, the processor 803 may be subsequently configured to recommend a video to the user by using the recommendation model.

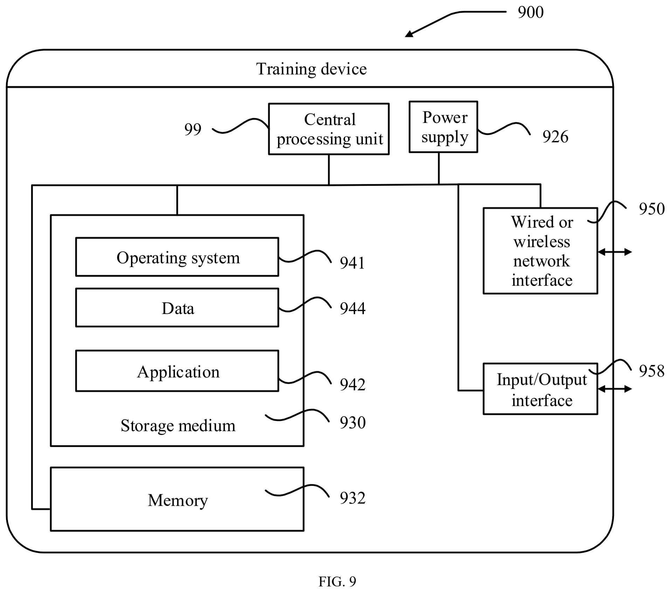

An embodiment of this application further relates to a training device. FIG. 9 is a diagram of a structure of a training device according to an embodiment of this application. As shown in FIG. 9, the training device 900 is implemented by one or more servers. The training device 900 may vary greatly due to different configurations or performance, and may include one or more central processing units (central processing units, CPU) 99 (for example, one or more processors), a memory 932, and one or more storage media 930 (for example, one or more mass storage devices) that store an application 942 or data 944. The memory 932 and the storage medium 930 may be used for temporary storage or persistent storage. A program stored in the storage medium 930 may include one or more modules (not shown in the figure), and each module may include a series of instruction operations for the training device. Further, the central processing unit 99 may be configured to communicate with the storage medium 930, and perform, on the training device 900, the series of instruction operations in the storage medium 930.

The training device 900 may further include one or more power supplies 926, one or more wired or wireless network interfaces 950, one or more input/output interfaces 958, and/or one or more operating systems 941, such as Windows ServerTM, Mac OS XTM, UnixTM, LinuxTM, and FreeBSDTM.

Specifically, under scheduling of the execution device, the training device may complete training of the recommendation model by using the assessment values of the plurality of videos, and return the recommendation model to the execution device.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in the training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

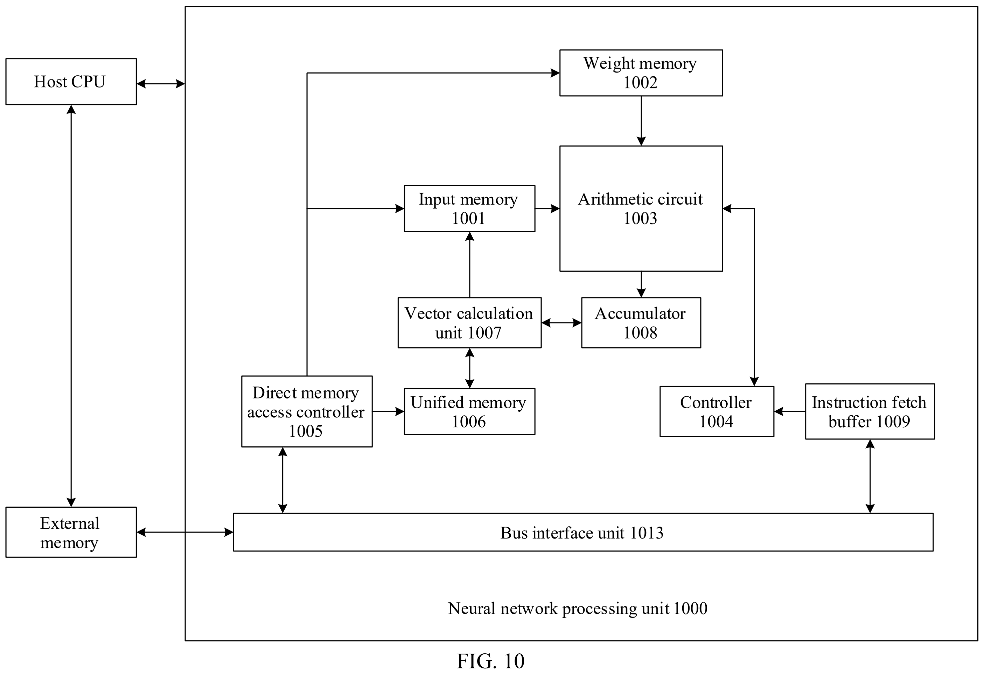

Specifically, FIG. 10 is a diagram of a structure of a chip according to an embodiment of this application. The chip may be represented as a neural-network processing unit NPU 1000. The NPU 1000 is mounted to a host CPU (host CPU) as a coprocessor, and the host CPU allocates a task. A core part of the NPU is an arithmetic circuit 1003. A controller 1004 controls the arithmetic circuit 1003 to extract matrix data in a memory and perform a multiplication operation.

In some implementations, the arithmetic circuit 1003 includes a plurality of process engines (Process Engine, PE). In some implementations, the arithmetic circuit 1003 is a two-dimensional systolic array. The arithmetic circuit 1003 may alternatively be a one-dimensional systolic array or another electronic circuit capable of performing mathematical operations such as multiplication and addition. In some implementations, the arithmetic circuit 1003 is a general-purpose matrix processor.

For example, it is assumed that there is an input matrix A, a weight matrix B, and an output matrix C. The arithmetic circuit fetches, from a weight memory 1002, data corresponding to the matrix B, and caches the data on each PE in the arithmetic circuit. The arithmetic circuit fetches data of the matrix A from an input memory 1001, performs a matrix operation on the data and the matrix B, and stores an obtained partial result or an obtained final result of the matrix in an accumulator (accumulator) 1008.

A unified memory 1006 is configured to store input data and output data. Weight data is directly transferred to the weight memory 1002 by using a direct memory access controller (Direct Memory Access Controller, DMAC) 1005. The input data is also transferred to the unified memory 1006 by using the DMAC.

A BIU is a bus interface unit, namely, a bus interface unit 1013, and is configured to perform interaction between an AXI bus, and the DMAC and an instruction fetch buffer (Instruction Fetch Buffer, IFB) 1009.

The bus interface unit 1013 (Bus Interface Unit, BIU for short) is used by the instruction fetch buffer 1009 to obtain instructions from an external memory, and further used by the storage unit access controller 1005 to obtain original data of the input matrix A or the weight matrix B from the external memory.

The DMAC is mainly configured to transfer input data in the external memory DDR to the unified memory 1006, transfer weight data to the weight memory 1002, or transfer input data to the input memory 1001.

A vector calculation unit 1007 includes a plurality of operation processing units. If necessary, further processing is performed on output of the arithmetic circuit 1003, for example, vector multiplication, vector addition, an exponential operation, a logarithmic operation, or value comparison. The vector calculation unit 1007 is mainly configured to perform network calculation at a non-convolutional/fully connected layer in a neural network, for example, batch normalization (batch normalization), pixel-level summation, and upsampling of a predicted label plane.

In some implementations, the vector calculation unit 1007 can store a processed output vector in the unified memory 1006. For example, the vector calculation unit 1007 may apply a linear function or a non-linear function to the output of the arithmetic circuit 1003, for example, perform linear interpolation on a predicted label plane extracted from a convolutional layer, and for another example, obtain a vector of an accumulated value to generate an activation value. In some implementations, the vector calculation unit 1007 generates a normalized value, a pixel-level summation value, or both. In some implementations, the processed output vector can be used as an activation input to the arithmetic circuit 1003, for example, the processed output vector can be used at a subsequent layer of the neural network.

The instruction fetch buffer (instruction fetch buffer) 1009 connected to the controller 1004 is configured to store instructions used by the controller 1004.

The unified memory 1006, the input memory 1001, the weight memory 1002, and the instruction fetch buffer 1009 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one place, or may be distributed on a plurality of network units. A part or all of the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, in this application, software program implementation is a better implementation in most cases. Based on such an understanding, the technical solutions of this application essentially or the part contributing to the conventional technologies may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

### Claims

1. A video assessment method, wherein the method comprises:

   obtaining a first video group, wherein the first video group comprises a plurality of first videos;
   processing watch times of the plurality of first videos, to obtain parameters of the first video group, wherein the parameters of the first video group indicate biases of the watch times of the plurality of first videos and noise of the watch times of the plurality of first videos; and
   obtaining assessment values of the plurality of first videos based on the parameters of the first video group and the watch times of the plurality of first videos, wherein the assessment values of the plurality of first videos indicate degrees of interest to a user for the plurality of first videos.

2. The method according to claim 1, wherein processing the watch times of the plurality of first videos, to obtain the parameters of the first video group comprises:
   processing the watch times of the plurality of first videos by using a Gaussian mixture model, to obtain the parameters of the first video group.

3. The method according to claim 1 or 2, wherein obtaining the assessment values of the plurality of first videos based on the parameters of the first video group and the watch times of the plurality of first videos comprises:

   performing a moving average operation on the parameters of the first video group and parameters of the second video group, to obtain new parameters of the first video group, wherein the new parameters of the first video group indicate new biases of the watch times of the plurality of first videos and new noise of the watch times of the plurality of first videos; and

obtaining the assessment values of the plurality of first videos based on the new parameters of the first video group and the watch times of the plurality of first videos.

4. The method according to claim 3, wherein obtaining the assessment values of the plurality of first videos based on the new parameters of the first video group and the watch times of the plurality of first videos comprises:

performing a first affine transformation operation on a watch time of a target video and the new parameters of the first video group, to obtain an assessment value of the target video, wherein the target video is any one of the plurality of first videos.

5. The method according to claim 3, wherein obtaining the assessment values of the plurality of first videos based on the new parameters of the first video group and the watch times of the plurality of first videos comprises:

performing a second affine transformation operation on a watch time of a target video, a preset hyperparameter, and the new parameters of the first video group, to obtain an assessment value of the target video, wherein the target video is any one of the plurality of first videos.

6. The method according to claim 4, wherein the first affine transformation operation comprises at least one of the following: a subtraction operation and a division operation.

7. The method according to claim 5, wherein the second affine transformation operation comprises at least one of the following: an exponential operation, a subtraction operation, a multiplication operation, and a division operation.

8. The method according to any one of claims 3 to 7, wherein the second video group comprises a plurality of second videos, durations of the plurality of first videos are within a preset first range, durations of the plurality of second videos are within a preset second range, and the first range and the second range do not overlap each other.

9. A video assessment apparatus, wherein the apparatus comprises:

a first obtaining module, configured to obtain a first video group, wherein the first video group comprises a plurality of first videos;

a processing module, configured to process watch times of the plurality of first videos, to obtain parameters of the first video group, wherein the parameters of the first video group indicate biases of the watch times of the plurality of first videos and noise of the watch times of the plurality of first videos; and

a second obtaining module, configured to obtain assessment values of the plurality of first videos based on the parameters of the first video group and the watch times of the plurality of first videos, wherein the assessment values of the plurality of first videos indicate degrees of interest to a user for the plurality of first videos.

10. The apparatus according to claim 9, wherein the processing module is configured to process the watch times of the plurality of first videos by using a Gaussian mixture model, to obtain the parameters of the first video group.

11. The apparatus according to claim 9 or 10, wherein the second obtaining module is configured to:

perform a moving average operation on the parameters of the first video group and parameters of the second video group, to obtain new parameters of the first video group, wherein the new parameters of the first video group indicate new biases of the watch times of the plurality of first videos and new noise of the watch times of the plurality of first videos; and

obtain the assessment values of the plurality of first videos based on the new parameters of the first video group and the watch times of the plurality of first videos.

12. The apparatus according to claim 11, wherein the second obtaining module is configured to perform a first affine transformation operation on a watch time of a target video and the new parameters of the first video group, to obtain an assessment value of the target video, wherein the target video is any one of the plurality of first videos.

13. The apparatus according to claim 11, wherein the second obtaining module is configured to perform a second affine transformation operation on a watch time of a target video, a preset hyperparameter, and the new parameters of the first video group, to obtain an assessment value of the target video, wherein the target video is any one of the plurality of first videos.

14. The apparatus according to claim 12, wherein the first affine transformation operation comprises at least one of the following: a subtraction operation and a division operation.

15. The apparatus according to claim 13, wherein the second affine transformation operation comprises at least one of the following: an exponential operation, a subtraction operation, a multiplication operation, and a division operation.

16. The apparatus according to any one of claims 11 to 15, wherein the second video group comprises a plurality of second videos, durations of the plurality of first videos are within a preset first range, durations of the plurality of second videos are within a preset second range, and the first range and the second range do not overlap each other.

17. A video assessment apparatus, wherein the video assessment apparatus comprises a memory and a processor, the memory stores code, the processor is configured to execute the code, and when the code is executed, the video assessment apparatus performs the method according to any one of claims 1 to 8.

18. A computer storage medium, wherein the computer storage medium stores one or more instructions, and when the instructions are executed by one or more computers, the one or more computers are enabled to perform the method according to any one of claims 1 to 8.

19. A computer program product, wherein the computer program product stores instructions, and when the instructions are executed by a computer, the computer is enabled to perform the method according to any one of claims 1 to 8.

Intelligent information chain

Intelligent products and industry applications

| Translation/Text analysis/... | Speech/Vision/Image/... |

Data

Data processing:

Data training/Machine learning/Deep learning

Searching/ Inference/ Decision-making

...

Infrastructure

| Sensor | Smart chip | Basic platform | ... |

IT value chain

FIG. 1

EP 4 738 814 A1

Interaction interface

Videos | Assessment values of the videos

Memory | Processor | Data training/Machine learning/Deep learning | Searching/ Inference/ Decision-making ...

Data processing device (server)

13:21

FIG. 2a

FIG. 2b

300

Execution device 210

Data storage system 250

...

Communication network

Local device 301

Local device 302

For example

FIG. 2c

FIG. 3

| |
|---|
| Obtain a first video group, where the first video group includes a plurality of first videos |

401

| |
|---|
| Process watch times of the plurality of first videos, to obtain parameters of the first video group, where the parameters of the first video group indicate biases of the watch times of the plurality of first videos and noise of the watch times of the plurality of first videos |

402

| |
|---|
| Obtain assessment values of the plurality of first videos based on the parameters of the first video group and the watch times of the plurality of first videos, where the assessment values of the plurality of first videos indicate degrees of interest to a user for the plurality of first videos |

403

FIG. 4

Duration bias

FIG. 5

Noise watching

FIG. 6

Video assessment apparatus

First obtaining module — 701

Processing module — 702

Second obtaining module — 703

FIG. 7

800

Execution device

Antenna

Antenna

Receiver 801

Transmitter 802

Processor 803

Memory 804

Application processor 8031

Communication processor 8032

FIG. 8

900

Training device

99 — Central processing unit

Power supply — 926

Operating system — 941

Data — 944

Wired or wireless network interface — 950

Application — 942

Storage medium — 930

Input/Output interface — 958

Memory — 932

FIG. 9

EP 4 738 814 A1

| Host CPU |

| Weight memory 1002 |

| Input memory 1001 |

| Arithmetic circuit 1003 |

| Vector calculation unit 1007 |

| Accumulator 1008 |

| Direct memory access controller 1005 |

| Unified memory 1006 |

| Controller 1004 |

| Instruction fetch buffer 1009 |

| External memory |

| Bus interface unit 1013 |

Neural network processing unit 1000

FIG. 10

**INTERNATIONAL SEARCH REPORT**

| International application No. |
| --- |
| **PCT/CN2024/105421** |

| A. | CLASSIFICATION OF SUBJECT MATTER |
| --- | --- |

H04N17/02(2006.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, ENTXTC, VEN, ENTXT, CNKI, IEEE: 时长, 时间, 观看, 播放, 偏置, 偏差, 消偏, 视频, 感兴趣, 推荐, 评估, 喜好, 噪声, 开头, 切换, 混合, 高斯, 滑动, 平均, duration, time, watch, play, bias, offset, deviation, video, interest, recommend, evaluate, like, noise, start, switch, mixture, gauss, slide, average

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117061733 A (HUAWEI TECHNOLOGIES CO., LTD. et al.) 14 November 2023 (2023-11-14)<br>claims 1-19 | 1-19 |
| Y | CN 116112705 A (DOUYIN VISION CO., LTD. et al.) 12 May 2023 (2023-05-12)<br>description, paragraphs 0063-0106 | 1-2, 9-10, 17-19 |
| Y | CN 116320511 A (SOUTH CHINA UNIVERSITY OF TECHNOLOGY) 23 June 2023 (2023-06-23)<br>description, paragraphs [0014] and [0015] | 1-2, 9-10, 17-19 |
| A | CN 114245185 A (BEIJING DAJIA INTERNET INFORMATION TECHNOLOGY CO., LTD.) 25 March 2022 (2022-03-25)<br>entire document | 1-19 |
| A | US 9736503 B1 (GOOGLE INC.) 15 August 2017 (2017-08-15)<br>entire document | 1-19 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 September 2024** | **21 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/105421** |

### C. DOCUMENTS CONSIDERED TO BE RELEVANT

| Category* | Citation of document, with indication, where appropriate, of the relevant passages | Relevant to claim No. |
| --- | --- | --- |
| A | CN 111259195 A (GRADUATE SCHOOL AT SHENZHEN, TSINGHUA UNIVERSITY) 09 June 2020 (2020-06-09) <br> entire document | 1-19 |
| A | ZHAN RUOHAN et al. "Deconfounding Duration Bias in Watch-time Prediction for Video Recommendation" <br> *KDD'22:Proceedings of the 28th ACM SIGKDD Conference on Knowledge Discovery and Data Mining*, 14 August 2022 (2022-08-14), <br> entire document | 1-19 |

Form PCT/ISA/210 (second sheet) (July 2022)

**INTERNATIONAL SEARCH REPORT**
Information on patent family members

International application No.

**PCT/CN2024/105421**

| Patent document cited in search report | | | Publication date (day/month/year) | Patent family member(s) | | | Publication date (day/month/year) |
|---|---|---|---|---|---|---|---|
| CN | 117061733 | A | 14 November 2023 | None | | | |
| CN | 116112705 | A | 12 May 2023 | None | | | |
| CN | 116320511 | A | 23 June 2023 | None | | | |
| CN | 114245185 | A | 25 March 2022 | CN | 114245185 | B | 09 February 2024 |
| US | 9736503 | B1 | 15 August 2017 | None | | | |
| CN | 111259195 | A | 09 June 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310885569X